# EUROPÄISCHE PATENTANMELDUNG

(11) **EP 4 806 817 A2**
(43) Veröffentlichungstag der Anmeldung: **16.09.2026**
(21) Anmeldenummer: 26163145.1
(22) Anmeldetag: 09.03.2026
(51) Int. Cl.: B65G 67/02, B60P 1/00, B65G 69/30

(54) **VERLADEGESTELL UND VERLADESYSTEM FÜR TRANSPORTFAHRZEUGE**

(30) Priorität: 11.03.2025 DE 202025101286 U
(71) Anmelder: Sachße, Frank, 88074 Meckenbeuren (DE)
(72) Erfinder: Sachße, Birgit, 88074 Meckenbeuren (DE)
(74) Vertreter: RavensPAT Patentanwälte Partnerschaft mbB

(57) **Zusammenfassung**

Vorgeschlagen wird ein kompaktes und einfach handhabbares Verladegestell (2) zum Verladen und Transportieren von Gütern, welches auf der Ladefläche und/oder im Laderaum (5) eines Transportfahrzeugs (4) abstellbar und/oder anordenbar ist. Zur effektiven Ausnutzung der Laderaumkapazität umfasst es eine Plattform (6) als Verladegestell-Basis, welche eine (begehbare) Verladefläche ausbildet, sowie wenigstens ein Regal (7, 8) mit wenigstens einem Regalfach (9) bzw. mit wenigstens zwei baukastenartig zusammengesetzten Regalfächern (9) zum Lagern der Güter, wobei das wenigstens eine Regal (7, 8) mit der Plattform (6) verbunden und beweglich auf der Plattform (6) gelagert ist, sodass es relativ zur Plattform (6) verfahrbar ist, und wobei das wenigstens eine Regal (7, 8) so gelagert ist, dass es wenigstens teilweise über den Außenrand (10) der Plattform (6) hinaus verfahrbar ist, während das jeweilige Regal (7, 8) dabei immer noch mit der Plattform (6) verbunden bleibt.

## Beschreibung

Die Erfindung betrifft ein Verladegestell zum Verladen und Transportieren von Gütern, welches auf der Ladefläche und/oder im Laderaum eines Transportfahrzeugs abstellbar und/oder anordenbar ist, nach dem Oberbegriff des Anspruchs 1, ein Transportfahrzeug nach dem Oberbegriff des Anspruchs 11 sowie ein Verladesystem nach dem Oberbegriff des Anspruchs 16.

Aus dem Stand der Technik sind zum Beispiel aus der DE 10 2016 010 688 A1 Systeme zum Be- und Entladen von Transportfahrzeugen bekannt, bei denen Regalmodule über eine mobile Transporteinheit in den Laderaum geschoben werden können.

Aufgabe der Erfindung ist, ein kompaktes und einfach handhabbares Verladesystem vorzuschlagen, welches die Laderaumkapazität im Transportfahrzeug möglichst effektiv ausnutzt.

Die Aufgabe wird, ausgehend von einem Verladesystem der eingangs genannten Art, durch die kennzeichnenden Merkmale der Ansprüche 1, 11 und 16 gelöst.

Durch die in den abhängigen Ansprüchen genannten Maßnahmen sind vorteilhafte Ausführungen und Weiterbildungen der Erfindung möglich.

Das erfindungsgemäße Verladegestell dient zum Verladen und Transportieren von Gütern in Transportfahrzeugen, vor allem in Kleintransporter und Vans. Es ist aber auch für Pritschenwagen oder dergleichen anwendbar. Es umfasst zunächst wenigstens ein Regal, bei dem die Güter in ein oder mehrere Regalfächer untergebracht werden können. Sie können dort sicher im Transportfahrzeug transportiert werden und sind aber auch so in das Transportfahrzeug verladen, dass sie später einfach lokalisiert bzw. schnell auch unter einer großen Anzahl an Gütern gefunden werden, was sich als vorteilhaft für eine effiziente Logistik erweist.

Das Verladegestell zeichnet sich dadurch aus, dass nicht nur Regale an sich eingesetzt werden, sondern das wenigstens eine Regal ist auf einer Plattform angebracht, welche die Basis des Verladegestells bietet. Die Plattform bietet den Vorteil, dass diese als eine Einheit zusammen mit dem oder den Regalen in den Laderaum des jeweiligen Transportfahrzeugs geschoben werden kann. Auf diese Weise kann Handhabung vereinfacht werden. Zudem kann ein solches Verladegestell insgesamt schneller und einfacher im Transportfahrzeug verstaut und gesichert werden. Neben einem schnellen Verladevorgang wird also auch ein erhöhtes Maß an Sicherheit im Straßenverkehr ermöglicht.

Die aus dem Transportfahrzeug entnehmbare Plattform mit mindestens einem Regal ermöglicht es, den eigentlichen Beladevorgang in einem geschützten, vor allem wettergeschützten Bereich, etwa in einer Lagerhalle, durchführen zu können, anstatt das Fahrzeug im Freien beladen zu müssen, wo die Güter auch Regen oder anderen Witterungsbedingungen ausgesetzt sind. Außerdem kann die Bestückung von Regalen sodann unabhängig vom Transportfahrzeug erledigt werden; d.h. es können logistische Prozesse parallelisiert werden: Während zum Beispiel das Transportfahrzeug noch unterwegs ist, kann das Verladegestell mit Gütern bestückt werden. Der eigentliche Verladevorgang am Transportfahrzeug umfasst somit das Entladen des Laderaums durch Herausnahme des mit dem Fahrzeug hertransportierten Verladegestells und das Beladen des Laderaums mit dem frisch bestückten Verladegestell. Wenige Handgriffe genügen beim Verladen, die entsprechende Person muss nicht zusammen mit den Gütern in den Händen noch weitere Strecken zurücklegen. Es kann also Zeit eingespart werden. Die Arbeitsbelastung des Mitarbeiters sinkt. Ein doppeltes Handling aus dem Lager zum Versandplatz und anschließend in das Fahrzeug kann entfallen.

Darüber hinaus muss beim Bestücken der Regale auf der Plattform bzw. beim Entnehmen von Gütern aus den Regalen auf der Plattform der Fahrer, Lagerist, eine sonstige Person oder ein Roboter nicht ins Transportfahrzeug klettern, sondern kann ebenerdig bzw. auf dem Boden arbeiten.

Die Regale können Regalfächer aufweisen. Sie können auch baukastenartig zusammengesetzt werden, d.h. ein Regal kann auch, je nach Bedarf, umgebaut werden, indem kleinere Regalfächer durch größere ersetzt werden oder umgekehrt. Die Regale können hierzu als Stecksysteme oder über Schnellverschlüsse zusammengebaut sein.

Die Plattform selbst ist bei einer Ausführungsform in vorteilhafter Weise begehbar ausgebildet, d.h. eine Person kann die Plattform, sei es auf dem Boden oder im Laderaum, besteigen und zum Beispiel zwischen den Regalen auf der Plattform laufen, wodurch nicht nur die Handhabung grundsätzlich erleichtert wird, sondern auch der Zugriff auf die Güter im Laderaum erleichtert wird.

In besonderer Weise zeichnet sich das erfindungsgemäße Verladegestell dadurch aus, dass das wenigstens eine Regal mit der Plattform verbunden und beweglich auf der Plattform gelagert ist, sodass es relativ zur Plattform verfahrbar ist. Durch die Verbindung bildet das Verladegestell, wie bereits oben dargestellt, eine verladbare Einheit von Plattform und Regal bzw. Regalen. Dadurch, dass das bzw. die Regale jedoch beweglich auf der Plattform gelagert sind, ist es möglich, den Laderaum optimal auszunutzen. In besonders vorteilhafter Weise kann das Regal bzw. können die Regale auf der Plattform so verschoben werden, dass sie wenigstens teilweise über den Außenrand der Plattform hinausragen können, um den Platz im Laderaum des Transportfahrzeugs optimal ausnutzen zu können. Die Lagerung erfolgt jedoch so, dass das Regal bzw. die Regale sich nicht ohne Weiteres von der Plattform lösen können, also z.B. nicht einfach von der Plattform fallen können. Eine Zerlegung bei einer Instandhaltung, Reparatur oder einem Austausch ist aber denkbar.

Wird das Verladegestell bzw. die Plattform in den Laderaum des Transporters geschoben, so ist dies grundsätzlich nur möglich, wenn die Maximalbreite des Gebildes des Verladegestells schmaler ist als die engste Stelle entlang der Breite des Laderaums. Transportfahrzeuge besitzen in der Regel im Laderaum keine größeren Verkleidungen, um das maximale Volumen ausnutzen zu können. Dennoch ragen in der Regel die Radkästen der Hinterräder in den Laderaum. Eine Plattform, deren Breite der Öffnungsbreite der Hecktüren des Transportfahrzeugs entspricht, kann daher wegen der Radkästen nicht oder allenfalls bis zu den Radkästen auf die Ladefläche geschoben werden. Über den Radkästen ist in der Regel wiederum Platz, aber die Plattform soll wiederum nicht über die Radkästen gehoben werden müssen. Außerdem wäre das Problem auch dann nicht beseitigt, wenn die Plattform über die gesamte Länge des Laderaums reichen soll, oder wenn dies aufgrund der Höhe des Verladegestells nicht möglich ist. Deshalb kann die Plattform gemäß der Erfindung zunächst so schmal ausgebildet sein, dass sie zwischen den Radkästen hindurchpasst. Damit hierdurch aber kein Platz verschwendet wird, da die Regale dann entsprechend von den Seitenwänden im Laderaum weiter beabstandet sind, kann dies durch ein Verschieben der beweglich gelagerten Regale im Laderaum ausgeglichen werden: Das Regal bzw. die Regale werden dann, nachdem sie beim Einschieben den Radkasten passiert haben, über den Außenrand der Plattform geschoben, sodass sie näher an die Laderaumwand rücken.

Um allerdings den Verladevorgang zu vereinfachen und sicherzustellen, dass die Regale nicht beim Be- oder Entladen von der Plattform fallen, sind diese stets mit der Plattform verbunden, auch wenn sie beweglich gelagert sind.

Die bewegliche Lagerung kann bei einer Ausführungsvariante der Erfindung als Führung gestaltet sein. Werden die Regale nur geradlinig, z. B. vom Innenbereich der Plattform über den Außenrand der Plattform verschoben, um die Regale näher an die Laderaum-Innenwand zu schieben, so genügt es, eine Linearführung vorzusehen. Die Führung und/oder der in der Führung gelagerte Führungsanker am Regal kann / können mit einem Anschlag oder dergleichen ausgestattet sein, damit das Regal nicht ohne Weiteres aus der Führung fallen kann.

Es ist denkbar, das bzw. die Regale von Hand auf der Plattform zu verschieben. Ein anderes Ausführungsbeispiel jedoch kann auch über einen motorischen Antrieb verfügen, über den das bzw. die Regale relativ zur Plattform verfahrbar sind. Zum einen kann dadurch die Bedienung erleichtert werden, gerade dann, wenn die Regale schwer beladen sind. Zusammen mit einem Kollisionsstopp des Motors können auch Schäden am Transportfahrzeug sowie am Verladegestell vermieden werden, indem der motorische Antrieb stoppt, sobald zum Beispiel ein Regal die Laderaumwand berührt. Gegebenenfalls kann sogar vermieden werden, dass der Benutzer bzw. Fahrer in den Laderaum klettern muss, sondern er kann die Regale von außen, z.B. per Fernbedienung, durch eine Anbringung einer gut erreichbaren Bedienvorrichtung, über ein Bluetooth^{®}-Verbindung zu einem mobilen Endgerät bzw. aus der Fahrerkabine des Transportfahrzeugs über die Fahrzeugarmatur. Der motorische Antrieb kann zum Beispiel als Stellmotor ausgebildet sein.

Damit kein Regal während der Fahrt in der Führung sich frei bewegen kann und unkontrolliert umherschlägt, Güter verliert, die Führung beschädigt oder dergleichen, kann es gegenüber der Plattform fixiert werden. Dies kann auf verschiedene Art und Weise erfolgen, etwa durch Klemmung in oder außerhalb der Führung, durch einen Rastmechanismus, durch Schraubverbindungen, Bolzen, oder sonstige mechanische Verbindungen. Denkbar ist auch, die Selbsthemmung des motorischen Antriebs hierfür zu nutzen.

Gerade bei hohen Regalen, die am Boden an der Plattform befestigt sind, stellen diese bei mechanischen Beanspruchungen, etwa während der Fahrt, einen großen Hebel dar. Daher kann es vorteilhaft sein, das wenigstens eine Regal mittels einer Fixiervorrichtung auf einer anderen Höhe als auf dem Plattformniveau, insbesondere an der Decke zu fixieren. Oftmals sind im Laderaum eines Transportfahrzeugs Ösen in der Karosserie eingebracht oder separate Ösen, Halterungen, Ringe oder dergleichen an der Karosserie angebracht. Eine einfache Ausführungsvariante besteht also darin, dass das entsprechende Regal ebenfalls über Ösen, Halterungsringe oder dergleichen verfügt, um einen Transportgurt, einen Expander oder gleichen zur Fixierung zu nutzen, der bzw. die hindurchgeführt werden. Denkbar ist auch, dass das Regal über eine verstellbare Klemmvorrichtung an der Decke abgestützt wird. Im Grunde sind sämtliche Fixiervorrichtungen denkbar, sowohl Universalfixiervorrichtungen, mit denen ein Regal an prinzipiell allen Decken oder Wänden des Transportfahrzeugs fixierbar ist, als auch spezielle Fixiervorrichtungen, bei denen das Transportfahrzeug, etwa im Laderaum, an der Decke bzw. Innenwand eine Fixiervorrichtung aufweist, die mit der Fixiervorrichtung des Verladegestells zur Fixierung zusammenwirkt. Auf diese Weise kann die Transportsicherheit erhöht werden.

Ebenfalls kann die Plattform bei einer Ausführungsform zur Erhöhung der Transportsicherheit wenigstens eine Arretiervorrichtung aufweisen, um die Plattform auf der Ladefläche bzw. im Laderaum des Transportfahrzeugs zu arretieren. Auf diese Weise wird das Verladegestell im Laderaum bzw. auf der Ladefläche gegen ein Verrutschen gesichert.

Das Verladegestell wird grundsätzlich in seiner Gesamtheit verladen, also die Plattform wird mit Regal bzw. mit den Regalen darauf in den Laderaum / auf die Ladefläche geschoben oder aus dem Laderaum bzw. von der Ladefläche genommen. Es ist daher in der Regel vorteilhaft, das Verladegestell auf die Ladefläche bzw. in den Laderaum zu schieben und umgekehrt das Verladegestell von der Ladefläche bzw. aus dem Laderaum herauszuziehen. Bei einer Ausführungsvariante der Erfindung ist daher eine Einschubführung zum Einschieben der Plattform vorgesehen. Die Einschubführung kann auch dazu dienen, das Verladegestell an eine definierte Position reproduzierbar im Laderaum bzw. auf der Ladefläche zu platzieren. Es kann somit die Handhabung erleichtert werden. Ein schnelleres Be- und Entladen ist möglich. Zudem wird das Risiko geringer, dass das Verladegestell beim Verladen an Teile des Transportfahrzeugs stößt und Fahrzeug, Gestell oder Güter beschädigt werden.

Bei einer vorteilhaften Ausführungsform des Transportfahrzeugs kann auf der Ladefläche bzw. auf dem Boden des Laderaums wenigstens eine Einschubführungsschiene angeordnet sein, um das Verladegestell definiert ein- bzw. ausfahren zu können. Damit sich möglichst wenig Schmutz auf der Schiene ablagert, kann die Schiene im Querschnitt dreieckig ausgebildet sein und mit der Spitze nach oben ausgerichtet werden. Vorteilhafterweise werden zwei Schienen parallel im bzw. am Transportfahrzeug angeordnet, damit sich das Gewicht gleichmäßig verteilen kann und ein einfaches Ein- bzw. Ausschieben möglich ist.

Dementsprechend kann bei einer Ausführungsvariante des Verladegestells die Einschubführung wenigstens eine Prismenrolle aufweisen, die insbesondere auf der im Querschnitt dreieckigen Schiene des Transportfahrzeugs fahren kann. Auf diese Weise kann eine kostengünstige und präzise Führung umgesetzt werden. Im Allgemeinen ermöglicht der Einsatz von Rollen einen leichten Lauf der beim Verladen. Es ist also auch denkbar, andere Rollen bzw. Laufrollen für die Führung zu verwenden.

Derartige Rollen können insbesondere in einer Linie angeordnet werden, sodass diese auch auf einer Schiene bzw. entlang einer geradlinig verlaufenden Schiene laufen können. Um eine gleichmäßige Gewichtsverteilung auf die Ladefläche bzw. den Boden des Laderaums zu erhalten, können die Rollen auf zwei oder auch mehr parallelen Linien angeordnet sein.

Der Verladevorgang kann zum Beispiel wie folgt ablaufen: Das Regal bzw. die Regale können grundsätzlich von der Plattform aus nach außen bzw. über den Außenrand verschoben werden. Beim Beladen des Transportfahrzeugs wird das Verladegestell in den Laderaum einschoben. Das bzw. die Regale sind auf der Plattform zum Zentrum der Plattform verschoben, sodass sie nicht über den Außenrand hinausragen und auch nicht mit dem Radkasten oder dergleichen kollidieren können. Ist die Plattform vollständig verladen, d.h. steht sie in ihrer Endposition auf der Ladefläche bzw. im Laderaum, können solche Regale, die sich nicht auf Höhe eines Radkastens oder eines sonstigen Hindernisses im seitlichen Bereich an den Wänden befinden, nach außen über den Außenrand der Plattform geschoben werden, bis sie sich möglichst nahe an den Wänden des Laderaums befinden. Enden die Regale alle vor oder hinter dem Radkasten, können die Regale frei verschoben werden. Sind aber längere Regale notwendig oder soll allgemein der Platz über dem Radkasten auch zum Verstauen genutzt werden, so kann das entsprechende Regal eine Ausnehmung aufweisen, um auf der Ladefläche bzw. im Laderaum über eine Ausbuchtung in der Karosserie, wie z.B. den Radkasten, oder über einen Teil des Chassis, insbesondere parallel zur Plattform, verschoben zu werden. Auf diese Weise können der Laderaum bzw. Stauraum möglichst gut ausgenutzt werden.

Die zu überbrückenden Karosserie- bzw. Chassis-Teile (z.B. Radkasten) sind regelmäßig an den Seiten des Laderaums bzw. der Ladefläche zu finden. Dementsprechend kann bei einer Ausführungsform zumindest ein Teil der Regale an den Seiten angeordnet und so verschiebbar sein, dass er nach außen hin über diese Karosserie- bzw. Chassis-Teile geschoben werden kann. In vorteilhafter Weise kann damit ein Gang zwischen den Regalen hergestellt werden. Zumindest wird der Zugang zu Regalfächern im Laderaum des Transportfahrzeugs ermöglicht.

Dementsprechend zeichnet sich ein erfindungsgemäßes Transportfahrzeug dadurch aus, dass ein Verladegestell nach der Erfindung bzw. einem der Ausführungsbeispiele vorgesehen ist. Mit einem speziell an das Transportfahrzeug angepassten Verladegestell, z. B. bezüglich der Breite der Plattform, einer auf die Höhe des Laderaums angepassten Regalhöhe usw. wird somit ein einfaches und rasches Verladen ermöglicht, zumal das Bestücken und das Entladen außerhalb des Transportfahrzeugs separat erfolgen kann.

Damit das Verladegestell in den Laderaum bzw. auf die Ladefläche des Transportfahrzeugs gestellt werden kann, müssen die Ausmaße des Verladegestells kleiner sein als der Öffnungsquerschnitt des Laderaums, durch den es geführt werden muss.

Zudem zeichnet sich ein erfindungsgemäßes Verladesystem auch dadurch aus, dass es mit den zu verladenden Gütern an einem geschützten Ort, etwa in einer Halle, bestückt werden kann. Das Verladesystem kann ein Verladegestell. Außerdem umfasst es einen Transportwagen, auf dem das Verladegestell abgestellt werden kann. Wird zum Beispiel das Verladegestell in einer Halle bestückt, muss es zum Transportfahrzeug, das etwa auf einem Parkplatz, einem Verladehof oder dergleichen steht, gefahren werden. Der Transportwagen kann dazu über Rollen verfahren werden. Denkbar sind auch Ausführungsformen, bei denen der Transportwagen als Flurfahrzeug, insbesondere selbstfahrendes Flurfahrzeug ausgebildet ist. Der Transportwagen kann aber auch statisch an einer Stelle platziert werden und dort zum Be- und Entladen stehen bleiben.

Bei einer vorteilhaften Weiterbildung der Erfindung kann der Transportwagen bzw. die Abstellfläche des Transportwagens auch höhenverstellbar ausgebildet sein, um insbesondere die Abstellfläche auf die Höhe der Ladefläche bzw. des Laderaums bzw. des Laderaumbodens nivellieren zu können. Somit können die Regale des Verladegestells in Höhe einer auf dem Boden stehenden Person bestückt werden. Wird die Plattform danach jedoch auf Höhe der Ladefläche bzw. des Laderaums bzw. des Laderaumbodens angehoben und nivelliert, so kann das Verladegestell horizontal auf die Ladefläche bzw. in den Laderaum geschoben werden. Diese Maßnahme erleichtert entsprechend die Handhabung. Hierzu kann eine handbetätigte oder eine maschinelle Hebe- und Senkvorrichtung vorgesehen sein.

Besonders vorteilhaft erweist es sich, wenn auf der Abstellfläche auch wenigstens eine Einschubführungsschiene, insbesondere wenigstens zwei Einschubführungsschienen vorgesehen sind, um zunächst das Schieben des Verladegestells in Richtung Transportfahrzeug zu erleichtern. Wenn die Einschubführungsschienen aber hinsichtlich ihrer Position und ihres Typs auch mit denen im Transportfahrzeug übereinstimmen, kann das Verladegestell auch problemlos den Übergang zwischen Transportwagen und Transportfahrzeug passieren. Die Einschubführungsschienen von Transportwagen und Transportfahrzeug können also baugleich ausgebildet und jeweils in gleichem Abstand angeordnet sein.

Das Verladesystem kann auch das Transportfahrzeug umfassen.

Wird das Verladegestell auf eine Ladefläche oder in einen Laderaum verschoben, so bewegt sich das Verladegestell relativ zum Transportwagen. Wenn Verladegestell manuell verschoben wird, können die Personen zunächst zum Beispiel seitlich neben dem Transportwagen stehen und das Verladegestell schieben. Wird stattdessen das Verladegestell motorisch angetrieben wird, erübrigt sich die Frage, wo die Person steht, weil dann eine Bedienung über ein Bedienpult, eine Fernbedienung, ein z.B. per Bluetooth^{®}-Verbindung gekoppeltes Endgerät oder dergleichen möglich ist. Bei einer seitlichen Position neben dem Transportwagen ist aber die Kraftübertragung schlechter, als wenn die Person unmittelbar in Bewegungsrichtung schiebt. Zudem muss die Person ihren Angriffspunkt am Verladegestell ständig ändern, sobald diese Stelle in den Laderaum eintaucht, weil dort die Seitenwand des Transportfahrzeugs im Weg ist. Ein Schieben in Verfahrrichtung ist zunächst schwierig, weil der Transportwagen im Wege steht. Daher erweist es sich bei einer vorteilhaften Ausführungsvariante der Erfindung als vorteilhaft, wenn der Transportwagen bzw. die Abstellfläche eine Aussparung, zumindest innerhalb der Abstellfläche umfasst, die in Längsrichtung entlang der und/oder zwischen den Einschubführungsschienen des Transportwagens angeordnet ist. So kann die Bedienperson das Verladegestell schieben und praktisch beim Schieben einen Teil der Länge des Transportwagen nutzen, weil die Person beim Schieben über die Länge der Aussparung in den Transportwagen hineinlaufen bzw. eintauchen kann und somit beim Schieben näher an das Transportfahrzeug herankommt.

Eine Weiterbildung der Erfindung umfasst für den Transportwagen eine Andockvorrichtung. Hierdurch können mehrere Vorteile erzielt werden:
- Die Einschubführungsschienen von Transportwagen und Transportfahrzeug können genau aufeinander abgestimmt werden, sodass das Verladegestell ohne Hindernis vom Transportwagen zum Transportfahrzeug und umgekehrt rollen kann.
- Die Höhennivellierung der Niveaus von Abstellfläche und Ladefläche / Laderaumboden können aufeinander abgestellt werden.
- Die Andockvorrichtung kann auch ein Wegrollen oder Verschieben des Transportwagens verhindern.
- Die Sicherheit beim Verladen kann erhöht werden.
- Die Handhabung kann erleichtert werden, wenn die Andockvorrichtung nur dann ein Andocken ermöglicht, wenn er Transportwagen bzw. die Abstellfläche korrekt platziert und hinsichtlich der Höhe aufeinander abgestellt sind.

### Figurenbeschreibung:

Ein Ausführungsbeispiel der Erfindung wird in den Zeichnungen dargestellt und anhand von Einzelheiten und Vorteilen näher beschrieben. Im Einzelnen zeigen:
- Fig. 1:: Verladesystem gem. der Erfindung,
- Fig. 2:: Verladegestell gem. der Erfindung (mit zusammengeschobenen Regalen),
- Fig. 3:: Regalführung beim Verladegestell nach Fig. 2,
- Fig. 4:: Verladegestell gem. der Erfindung (mit seitlich auseinandergeschobenen Regalen), sowie
- Fig. 5:: Einschubführung im Übergang vom Transportwagen zum Transportfahrzeug beim Verladesystem nach Fig. 1.

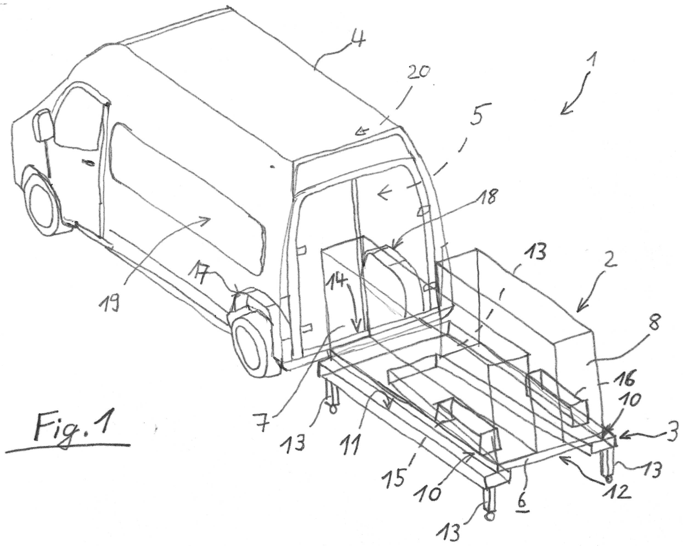

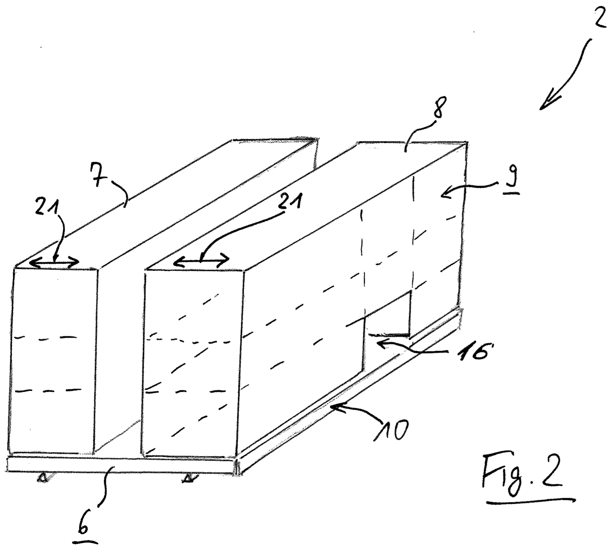

Figur 1 zeigt ein Verladesystem 1 mit einem Verladegestell 2, einem Transportwagen 3 und einem Transportfahrzeug 4 mit einem Laderaum 5. Das Verladegestell 2 umfasst eine Plattform 6 als Basis und zwei einander gegenüberliegende Regale 7, 8, wobei die Regale 7, 8 aus Regalfächern 9 baukastenartig zusammengesetzt sind (vgl. Fig. 2), z.B. durch ein Stecksystem. Die zu transportierenden Güter werden in die Regalfächer 9 abgelegt. Die Regale 7, 8 sind so auf der Plattform 6 gelagert, dass sie nach außen über den Außenrand 10 der Plattform 6 verfahren werden können. In Figur 1 sind die Regale 7, 8 nach innen verschoben, sodass sie nicht über den Außenrand 10 der Plattform 6 hinausragen, sodass das Verladegestell 2 in den Laderaum 5 des Transportfahrzeugs 4 geschoben oder umgekehrt aus dem Laderaum 5 herausgezogen werden kann.

Die Abstellfläche 11 des Transportwagens 3 ist nicht als durchgehender Quader ausgebildet, sondern weist eine von der Rückseite ausgehende, hier in Längsrichtung zum Transportfahrzeug 4 verlaufende Aussparung 12 auf. Der Transportwagen 3 wird aber nicht von der Aussparung 12 durchbrochen. Der Fahrer, der das Verladegestell 2 in den Laderaum 5 einschieben soll, kann somit in der Mitte des Transportwagens 3 in Richtung Transportfahrzeug 4 laufen, während er das Verladegestell 2 schiebt.

Die Plattform 6 wird von höhenverstellbaren Stützen 13 gehalten, die es ermöglichen, die Plattform 6 auf Höhe des Laderaumbodens 14 zu nivellieren.

In den Regalen 7, 8 sind ebenfalls die Ausnehmungen 15, 16 zu sehen. Ist das Verladegestell 2 vollständig in den Laderaum 5 eingeschoben, liegen die Ausnehmungen 15, 16 jeweils in Höhe der Radkästen 17, 18, sodass die Regale 7, 8 jeweils nach außen in Richtung der Laderaumseitenwände 19, 20 geschoben werden können, ohne zu blockieren.

Figur 2 zeigt das Verladegestell 2 mit Plattform 6 als Trägerbasis und zwei gegenüberliegend angeordnete Regale 7, 8 mit Regalfächern 9. Die Regale 7, 8 sind zusammengeschoben und ragen nicht über den Außenrand 10 der Plattform 6 hinaus. Eine Verschiebung der Regale ist grundsätzlich in Richtung der Pfeile 21 möglich.

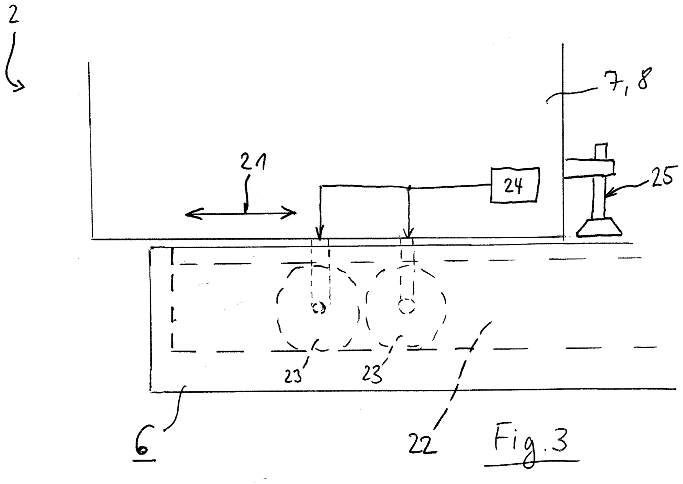

Die Verschiebung der Regale 7, 8 erfolgt durch eine Lagerung, wie sie in Figur 3 schematisch dargestellt und näher beschrieben ist. Die Regale 7, 8 laufen in einer Führung 22 auf Rollen 23, die mit Hilfe eines Motors 24 angetrieben werden. Die Führung 22 ist im Querschnitt T-förmig ausgebildet und in Verschieberichtung 21 zu beiden Seiten geschlossen, sodass die Rollen 23 nicht aus der Führung 22 laufen können. Die Regale 7, 8 können durch eine Klemmvorrichtung 25 geklemmt werden, sodass ein Rollen der Regale 7, 8 entlang der Richtung 21 in der Führung nicht mehr möglich ist. Auch die Selbsthemmung des Motors 24 kann die Klemmung bewirken oder unterstützen.

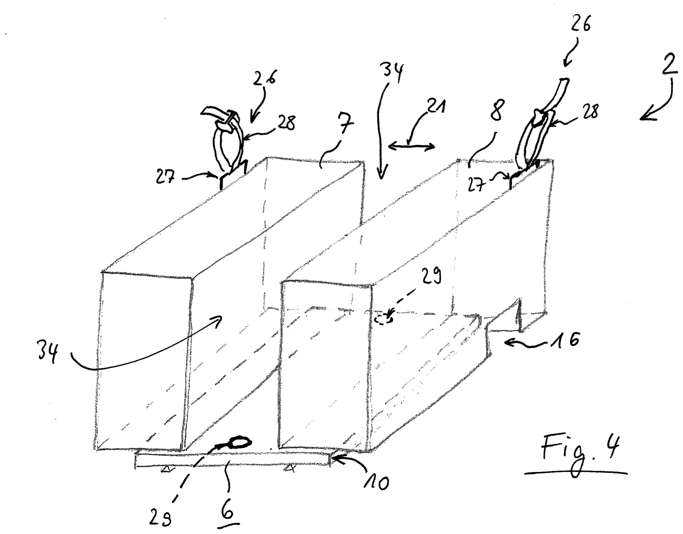

Gegenüber Figur 3 sind die Regale 7, 8 in Figur 4 weiter nach außen über den Außenrand 10 der Plattform 6 verschoben. Die Ausnehmung 16 z.B. kann über den Radkasten 18 ragen. Die Regale 7, 8 können an der Fahrzeugdecke über eine Fixiervorrichtung 26, hier eine Öse 27 mit einem Spanngurt 28, für den Transport fixiert werden.

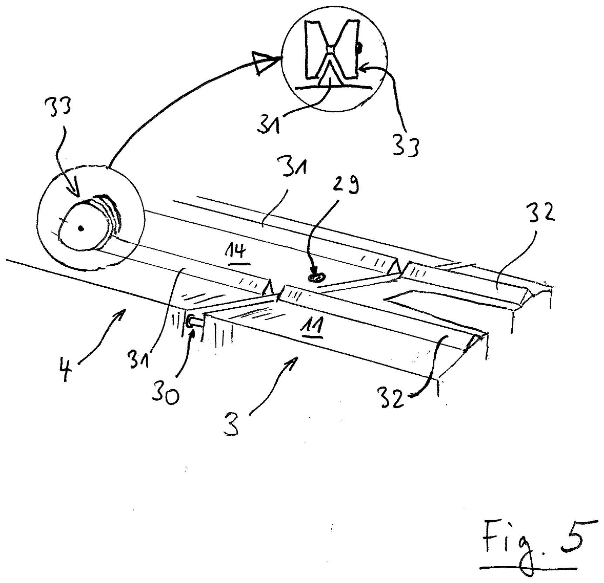

In Figur 4 sind die Arretiervorrichtungen 29, mit denen die Plattform 6 bzw. das Verladegestell 2 arretiert wird, nur schematisch eingezeichnet, genauso wie das schematisch dargestellte Pendant zu diesen Arretiervorrichtungen 29 in Figur 5.

In Figur 5 ist ein Transportwagen 3 bzw. eine Abstellfläche 11 dargestellt, welche auf die Höhe des Bodens 14 des Laderaums 5 des Transportfahrzeugs 4 nivelliert ist. Schematisch ist ebenso eine Andockvorrichtung 30, mit welcher der Transportwagen 3 ans Fahrzeug 4 andockt, um gegen ein Verrutschen des Transportwagens 3 zu wirken.

Die Abstellfläche 11 des Transportwagens 3 und der Laderaumboden 14 sind auf gleicher Höhe angeordnet und auch so ausgerichtet , dass die Einschubführungsschienen 31, 32 fluchtend zueinander angeordnet sind. Die Plattform 6 bzw. das Verladegestell 2 verfügt als Einschubführung 33 über Prismenrollen 33, die hinsichtlich ihrer Formgebung passend auf den Einschubführungsschienen 31, 32 laufen. Durch die Dreiecksform im Querschnitt verdrecken die Schienen 31, 32 nicht so schnell.

Sind die Regale 7, 8 auf der Plattform 6 auseinandergeschoben, bildet sich grundsätzlich dazwischen ein Gang 34 aus, vgl. Fig. 4.

Allen Ausführungsformen und Weiterbildungen der Erfindung ist gemeinsam, dass Verladegestell zum Verladen und Transportieren von Gütern, welches auf der Ladefläche und/oder im Laderaum eines Transportfahrzeugs abstellbar und/oder anordenbar ist, sich auszeichnet durch:
- eine Plattform als Basis des Verladegestells, welche eine Verladefläche, insbesondere eine begehbare Verladefläche ausbildet,
- wenigstens ein Regal mit wenigstens einem Regalfach und/oder mit wenigstens zwei baukastenartig zusammengesetzten Regalfächern zum Lagern der Güter,
- wobei das wenigstens eine Regal mit der Plattform verbunden und beweglich auf der Plattform gelagert ist, sodass es relativ zur Plattform verfahrbar ist,
- wobei das wenigstens eine Regal so gelagert ist, dass es wenigstens teilweise über den Außenrand der Plattform hinaus verfahrbar ist, während das jeweilige Regal dabei immer noch mit der Plattform verbunden bleibt, um eine schnelle und deutlich einfachere Handhabung zu erzielen, die auch weniger Transportrisken für die Güter darstellt. Zudem kann die Laderaumkapazität besser ausgenutzt werden.

### Bezugszeichenliste

- 1: Verladesystem
- 2: Verladegestell
- 3: Transportwagen
- 4: Transportwagen
- 5: Laderaum
- 6: Plattform
- 7: Regal
- 8: Regal
- 9: Regalfächer
- 10: Außenrand
- 11: Abstellfläche
- 12: Aussparung
- 13: Hub- / Senkvorrichtung
- 14: Boden des Laderaums
- 15: Ausnehmung
- 16: Ausnehmung
- 17: Radkasten
- 18: Radkasten
- 19: Laderaumseitenwand
- 20: Laderaumseitenwand
- 21: Verschieberichtungen (Pfeile)
- 22: T-Führung
- 23: Rollen
- 24: Motor
- 25: Klemmvorrichtung
- 26: Fixiervorrichtung
- 27: Ösen
- 28: Spanngurte
- 29: Arretiervorrichtung
- 30: Andockvorrichtung
- 31: Einschubführungsschiene
- 32: Einschubführungsschiene
- 33: Prismenrollen
- 34: Gang

## Patentansprüche

1. Verladegestell (2) zum Verladen und Transportieren von Gütern, welches auf der Ladefläche und/oder im Laderaum (5) eines Transportfahrzeugs (4) abstellbar und/oder anordenbar ist, **gekennzeichnet durch**:
• eine Plattform (6) als Basis des Verladegestells, welche eine Verladefläche, insbesondere eine begehbare Verladefläche ausbildet,
• wenigstens ein Regal (7, 8) mit wenigstens einem Regalfach (9) und/oder mit wenigstens zwei baukastenartig zusammengesetzten Regalfächern (9) zum Lagern der Güter,
• wobei das wenigstens eine Regal (7, 8) mit der Plattform (6) verbunden und beweglich auf der Plattform (6) gelagert ist, sodass es relativ zur Plattform (6) verfahrbar ist,
• wobei das wenigstens eine Regal (7, 8) so gelagert ist, dass es wenigstens teilweise über den Außenrand (10) der Plattform (6) hinaus verfahrbar ist, während das jeweilige Regal (7, 8) dabei immer noch mit der Plattform (6) verbunden bleibt.

2. Verladegestell (2) nach Anspruch 1, **dadurch gekennzeichnet, dass** das wenigstens eine Regal (7, 8) in einer Führung (22), insbesondere in einer Linearführung (22) der Plattform (6) beweglich gelagert ist.

3. Verladegestell (2) nach einem der vorgenannten Ansprüche, **dadurch gekennzeichnet, dass** das wenigstens eine Regal (7, 8) über einen motorischen Antrieb (24) relativ zur Plattform (6) verfahrbar ist.

4. Verladegestell (2) nach einem der vorgenannten Ansprüche, **dadurch gekennzeichnet, dass** das wenigstens eine Regal (7, 8) gegenüber der Plattform (6) fixierbar (25), insbesondere über eine Selbsthemmung des motorischen Antriebs (24) fixierbar ist.

5. Verladegestell (2) nach einem der vorgenannten Ansprüche, **dadurch gekennzeichnet, dass** das wenigstens eine Regal (7, 8) eine Fixiervorrichtung (26) zur Fixierung an der Decke oder der Laderaum-Innenwand (19, 20) des Transportfahrzeugs (4) aufweist.

6. Verladegestell (2) nach einem der vorgenannten Ansprüche, **dadurch gekennzeichnet, dass** die Plattform (6) wenigstens eine Arretiervorrichtung (29) zum Arretieren der Plattform (6) auf der Ladefläche und/oder im Laderaum (5) des Transportfahrzeugs (4) aufweist.

7. Verladegestell (2) nach einem der vorgenannten Ansprüche, **dadurch gekennzeichnet, dass** die Plattform (6) eine Einschubführung (33) zum Einschieben der Plattform (6) auf die Ladefläche und/oder in den Laderaum (5) des Transportfahrzeugs (4) aufweist.

8. Verladegestell (2) nach Anspruch 7, **dadurch gekennzeichnet, dass** die Einschubführung wenigstens eine Rolle, insbesondere eine Prismenrolle (33) umfasst, wobei insbesondere wenigstens zwei Prismenrollen (33) hintereinander entlang einer Linie innerhalb der durch die Unterseite der Plattform (6) gebildeten Ebene, wobei vorzugsweise wenigstens zwei parallele Linien mit entsprechend innerhalb der durch die Unterseite der Plattform (6) gebildeten Ebene vorhanden sind.

9. Verladegestell (2) nach einem der vorgenannten Ansprüche, **dadurch gekennzeichnet, dass** das Regal oder wenigstens eines der Regale (7, 8) eine Ausnehmung (15, 16) aufweist, um auf der Ladefläche und/oder im Laderaum (5) über eine Ausbuchtung (17, 18) der Karosserie und/oder des Chassis in Richtung der Ladefläche und/oder des Laderaums (5) geschoben werden zu können.

10. Verladegestell (2) nach einem der vorgenannten Ansprüche, **dadurch gekennzeichnet, dass** wenigstens zwei der Regale (7, 8) auf der Plattform (6) an gegenüberliegenden Seiten angeordnet und über die Führung (22) aufeinander zu und voneinander weg verfahrbar sind, sodass bei einer Bewegung voneinander weg vorzugsweise ein Gang (34) zwischen den entsprechenden Regalen (7, 8) hergestellt wird.

11. Transportfahrzeug (4) zum Transportieren von Gütern mit einer Ladefläche und/oder einem Laderaum (5), **dadurch gekennzeichnet, dass** ein Verladegestell (2) nach einem der vorgenannten Ansprüche vorgesehen ist.

12. Transportfahrzeug nach Anspruch 11, **dadurch gekennzeichnet, dass** die Plattform (6) eine geringere Breite und eine geringere Länge als die minimale freie Breite und entsprechend die minimale freie Länge am Boden der Ladefläche und/oder des Laderaums (5) aufweist, sodass insbesondere das Verladegestell (2) zwischen den Radkästen (17, 18) des Transportfahrzeugs (4) auf der Ladefläche und/oder dem Laderaum (5) einschiebbar ist.

13. Transportfahrzeug (4) nach Anspruch 11 oder 12, **dadurch gekennzeichnet, dass** das oder die Regale (7,8 ) mit der Ausnehmung (15, 16) so ausgebildet sind, dass die Ausnehmung (15, 16) in der Position, in der die Plattform (6) und/oder das Verladegestell (2) auf der Ladefläche und/oder im Laderaum (5) abgestellt und/oder angeordnet ist, insbesondere in der mit der wenigstens einen Arretiervorrichtung (29) arretierten Position, über die Ausbuchtung (17, 18) der Karosserie und/oder des Chassis geschoben werden kann.

14. Transportfahrzeug (4) nach Anspruch 11 bis 13, **dadurch gekennzeichnet, dass** auf der Ladefläche und/oder am Boden (14) des Laderaums (5) wenigstens eine Einschubführungsschiene (31), insbesondere zwei parallele Einschubführungsschienen (31), vorzugsweise wenigstens eine in Fahrtrichtung angeordnete Einschubführungsschiene (31) vorhanden ist.

15. Transportfahrzeug (4) nach Anspruch 11 bis 14, **dadurch gekennzeichnet, dass** die Einschubführungsschiene (31) oder wenigstens eine der Einschubführungsschienen (31) im Querschnitt dreieckig ausgebildet ist.

16. Verladesystem (1) zum Verladen von Gütern, umfassend ein Verladegestell (2) nach einem der vorgenannten Ansprüche zum Lagern der Güter sowie einen verfahrbaren, insbesondere über Rollen verfahrbaren Transportwagen (3), auf dem das Verladegestell (2) abstellbar und zusammen mit dem Transportwagen (3) verfahrbar ist, wobei der Transportwagen (3) mit dem darauf abgestellten Verfahrgestell (2) über eine Hub- und Senkeinrichtung (13) höhennivellierbar und/oder höhenverstellbar ausgebildet ist.

17. Verladesystem (1) nach Anspruch 16, **dadurch gekennzeichnet, dass** ein Transportfahrzeug (4) und/oder ein Transportfahrzeug (4) nach einem der Ansprüche 11-15 vorgesehen ist.

18. Verladesystem (1) nach Anspruch 16 oder 17, **dadurch gekennzeichnet, dass** die Hub- und Senkvorrichtung (13) die Abstellfläche (11) des Transportwagens (3) auf die Höhe der Ladefläche und/oder des Laderaums (5) nivellieren kann.

19. Verladesystem (1) nach einem der Ansprüche 16 bis 18, **dadurch gekennzeichnet, dass** der Transportwagen (3) auf der Abstellfläche (11) wenigstens eine Einschubführungsschiene (32), insbesondere zwei parallele Einschubführungsschienen (32), vorzugsweise wenigstens eine in Fahrtrichtung angeordnete Einschubführungsschiene (32) aufweist, welche besonders bevorzugt baugleich zu der und/oder den Einschubführungsschienen (31) des Transportfahrzeugs (4) ausgebildet ist/sind.

20. Verladesystem (1) nach einem der Ansprüche 16 bis 19, **dadurch gekennzeichnet, dass** der Transportwagen (3)oder die Abstellfläche (11) des Transportwagens eine Aussparung (12) innerhalb der Abstellfäche (11) aufweist, die in Längsrichtung entlang der und/oder zwischen den Einschubführungsschienen (32) des Transportwagens angeordnet ist, sodass ein auf dem Boden stehende Person den Transportwagen (3) auf den Einschubführungsschienen (32) von Hand über den Transportwagen (3) schieben kann.

21. Verladesystem (1) nach einem der Ansprüche 16 bis 20, **dadurch gekennzeichnet, dass** der Transportwagen (3) eine Andockvorrichtung (30) zum Andocken an das Transportfahrzeug (4) aufweist.
